# EUROPEAN PATENT APPLICATION

(11) **EP 2 626 977 A2**
(43) Date of publication of application: **14.08.2013**
(21) Application number: 13152349.0
(22) Date of filing: 23.01.2013
(51) Int. Cl.: H02K 1/27

(54) **Rotary electric machine**

(30) Priority: 13.02.2012 JP 2012028198
(71) Applicant: Kabushiki Kaisha Yaskawa Denki, Kitakyushu-shi, Fukuoka 806-0004 (JP)
(72) Inventor: TOMOHARA, Kenji, Kitakyushu-shi, Fukuoka 806-0004 (JP); MAEMURA, Akihiko, Kitakyushu-shi, Fukuoka 806-0004 (JP)
(74) Representative: Viering, Jentschura & Partner

(57) **Abstract**

A rotary electric machine includes a rotor core in which first magnetic pole portions having permanent magnets and second magnetic pole portions having no permanent magnets are alternately arranged in a circumferential direction. Each of the second magnetic pole portions has at least one notch provided near the permanent magnet adjacent thereto.

## Description

### BACKGROUND OF THE INVENTION

### Field of the Invention

Disclosed embodiments relate to a rotary electric machine.

### Background of the Invention

Conventionally, there is known an electric motor (rotary electric machine) having a rotor core (see, e.g., Japanese Patent Laid-open Publication No. H1-286758).

Japanese Patent Laid-open Publication No. H1-286758 discloses an electric motor (rotary electric machine) including a rotor core having a plurality of permanent magnets. In this motor, the permanent magnets are arranged at predetermined intervals in a circumferential manner on the outer periphery of the rotor core. Further, the rotor core between the adjacent permanent magnets is formed in a shape of protrusion. That is, the permanent magnets and the protruding portions of the rotor core are alternately arranged one by one. Thus, it is configured to obtain a magnet torque between the permanent magnet and winding provided in a stator, and a reluctance torque between the rotor core and the winding provided in the stator.

In the electric motor (rotary electric machine) disclosed in Japanese Patent Laid-open Publication No. H1-286758, however, since the protruding portion of the rotor core is provided between the adjacent permanent magnets, there is a problem in that the magnetic flux of the permanent magnets 23 leaks to the protruding portion of the rotor core.

### SUMMARY OF THE INVENTION

In view of the above, there is provided a rotary electric machine capable of suppressing the leakage of the magnetic flux of permanent magnets.

In accordance with an aspect of the disclosed embodiments, there is provided a rotary electric machine including a rotor core in which first magnetic pole portions having permanent magnets and second magnetic pole portions having no permanent magnets are alternately arranged in a circumferential direction, wherein each of the second magnetic pole portions has at least one notch provided near the permanent magnet adjacent thereto.

According to the disclosed embodiments, it is possible to provide a rotary electric machine capable of suppressing the leakage of the magnetic flux of permanent magnets.

### BRIEF DESCRIPTION OF THE DRAWINGS

The objects and features of the disclosed embodiments will become apparent from the following description of embodiments, given in conjunction with the accompanying drawings, in which:
FIG. 1 is a plan view of a motor in accordance with a first embodiment;
FIG. 2 is an enlarged view of the motor shown in FIG. 1;
FIG. 3 is a plan view of a permanent magnet of the motor in accordance with the first embodiment;
FIG. 4 is a plan view of a rotor core of the motor in accordance with the first embodiment;
FIG. 5 is a plan view of a motor according to a comparative example;
FIG. 6 is a diagram for explaining a magnetic flux generated in the motor in accordance with the first embodiment;
FIG. 7 is a diagram showing a relationship between the inductance and the current of the motor according to the first embodiment and the motor according to the comparative example;
FIG. 8 is a plan view of a motor in accordance with a second embodiment; and
FIG. 9 is a plan view of a motor according to a modification example of the first embodiment.

### DESCRIPTION OF THE EMBODIMENTS

Hereinafter, embodiments will be described in detail with reference to the accompanying drawings.

### (First Embodiment)

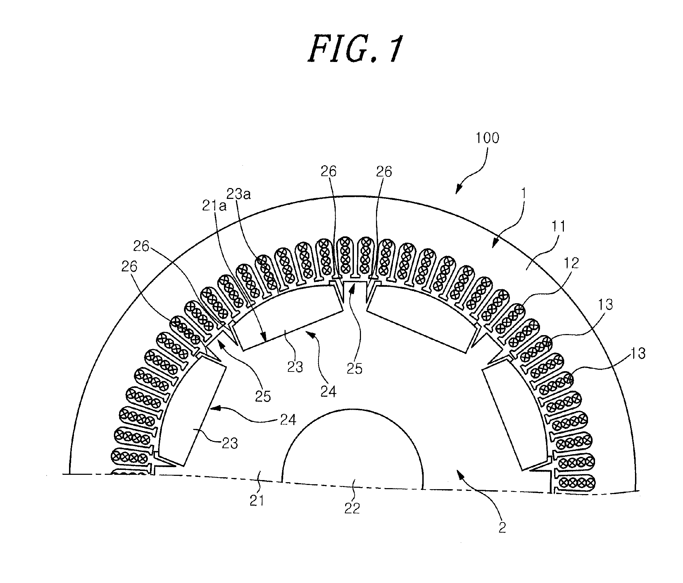

First, a configuration of a motor 100 in accordance with a first embodiment of the disclosure will be described with reference to FIGS. 1 to 4. The motor 100 is an example of "rotary electric machine".

As shown in FIG. 1, the motor 100 includes a stator 1 and a rotor 2. The stator 1 is arranged so as to face an outer peripheral portion of the rotor 2 (rotor core 21). The stator 1 also includes a stator core 11 and windings 12. At an inner side of the stator core 11, a plurality of slots 13 are formed.

The rotor 2 includes the rotor core 21, a shaft 22, and permanent magnets 23. In the first embodiment, the rotor core 21 includes a plurality of first magnetic pole portions 24 having the permanent magnets 23 and a plurality of second magnetic pole portions 25 having no permanent magnets 23 which are alternately arranged one by one in a circumferential manner. Further, each of the second magnetic pole portions 25 is configured as a protruding portion of the rotor core 21 located between two permanent magnets 23 adjacent to each other.

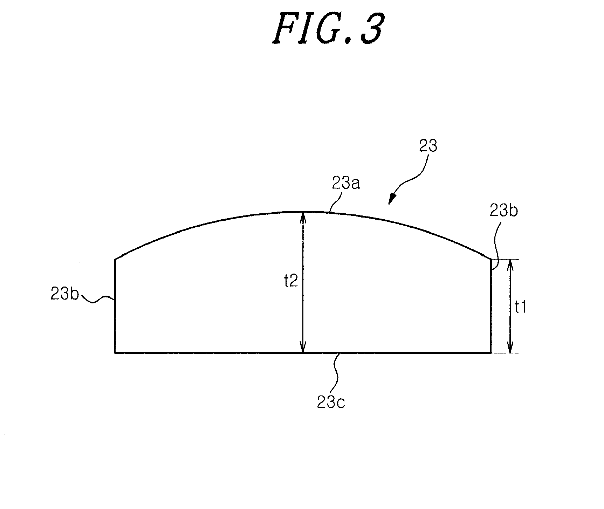

As shown in FIG. 3, a surface 23a of each of the permanent magnets 23 on the side of the stator core 11 is formed in a convex (arcuate) shape toward the stator core 11 when viewed from the axial direction. The radius of curvature of the surface 23a is smaller than that of an inner peripheral portion of the stator core 11. Both side surfaces 23b of the permanent magnet 23 in the circumferential direction of the rotor and a surface 23c of the permanent magnet 23 on the inner peripheral side of the rotor core 21 are formed in a linear shape (flat surface shape) when viewed from the axial direction.

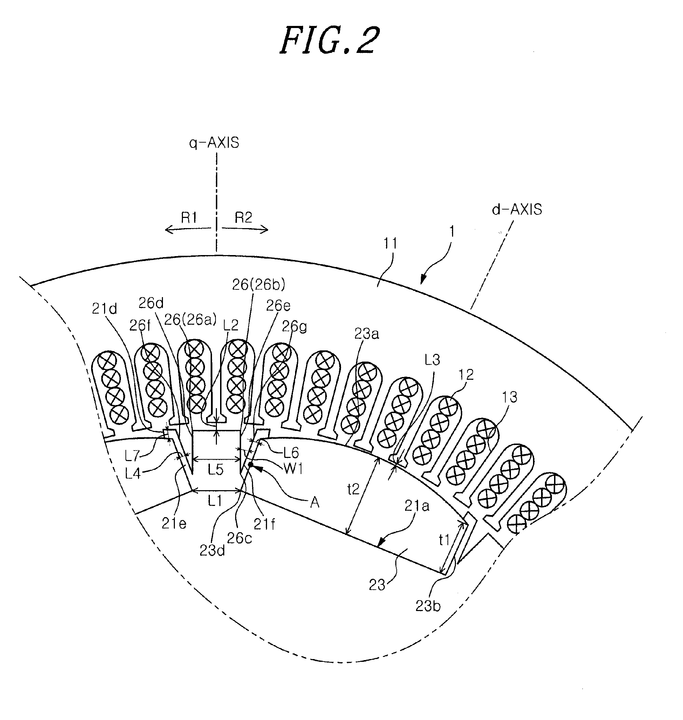

In the first embodiment, the permanent magnet 23 has a shape such that a thickness t2 of the central portion in the circumferential direction is larger than a thickness (i.e., length of the side surfaces 23b in the circumferential direction of the rotor) t1 of the end portion in the circumferential direction. Further, as shown in FIGS. 1 and 2, the permanent magnets 23 are disposed substantially equidistant in the circumferential direction.

The thickness of the permanent magnets 23 in the radial direction of the rotor is larger than a minimum interval L1 between the permanent magnets 23 of the two first magnetic pole portions 24 adjacent to each other (distance on the innermost peripheral side between the two adjacent permanent magnets 23). Additionally, the permanent magnet 23 is constituted by a ferrite permanent magnet.

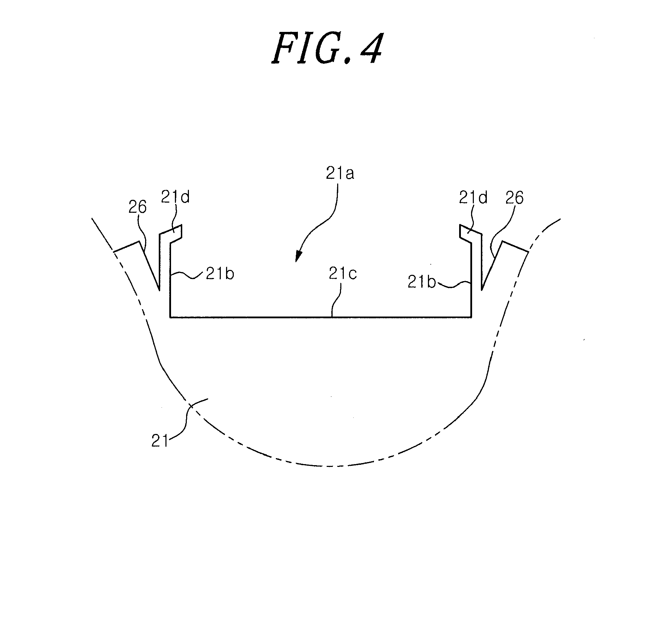

In the first embodiment, the permanent magnets 23 are embedded along the circumferential direction in the vicinity of the outer periphery of the rotor core 21. More specifically, the permanent magnets 23 are arranged on mounting portions 21a provided at the outer peripheral portion of the rotor core 21. As shown in FIG. 4, the mounting portions 21a are formed in a groove shape opened on the side of the stator core 11. Thus, as shown in FIG. 2, a portion (portion other than both end portions of the permanent magnet 23) of the surface 23a of the permanent magnet 23 on the side of the stator core 11 is exposed.

As shown in FIG. 4, each of the mounting portions 21a includes side portions 21b in contact with the side surfaces 23b (see FIG. 2) of the permanent magnet 23 and having a straight line shape when viewed from the axial direction, a bottom portion 21c in contact with the surface 23c (see FIG. 2) of the permanent magnet 23 on the inner peripheral side of the rotor core 21 and having a straight line shape when viewed from the axial direction. Each of the mounting portions 21a further includes claw portions 21d engaging with opposite end portions of the surface 23a (see FIG. 2) of the permanent magnet 23 in the circumferential direction. Further, the claw portions 21d have a function to prevent the permanent magnet 23 from popping out of the rotor core 21 when the rotor core 21 is rotated.

In the first embodiment, as shown in FIG. 2, the rotor core 21 is configured to have an average value of a gap length L2 between the second magnetic pole portions 25 and the stator core 11 larger than an average value of a gap length L3 between the first magnetic pole portions 24 and the stator core 11. Further, in the first magnetic pole portion 24 (permanent magnet 23), the surface 23a on the side of the stator core 11 is formed in a circular arc shape having a radius of curvature smaller than that of the inner periphery of the stator core 11. The permanent magnet 23 is the closest to the stator core 11 in the central portion of the permanent magnet 23 in the circumferential direction.

For example, the gap length L3 between the stator core 11 and a portion of the permanent magnet 23 closest thereto is about 0.4 mm. Also, the outer peripheral surface of each of the second magnetic pole portions 25 is configured to have a radius of curvature substantially the same as the stator core 11. Thus, the gap length L2 between the stator core 11 and the second magnetic pole portions 25 is substantially equal along the circumferential direction. For example, the gap length L2 between the stator core 11 and the second magnetic pole portions 25 is about 1 mm.

As shown in FIGS. 1 and 2, notches 26 are provided in portions of the second magnetic pole portions 25 on the side of the permanent magnets 23. The notches 26 are formed so as to extend in the axial direction (perpendicular to the paper surface) of the rotor core 21. In addition, the notches 26 are provided in each of the second magnetic pole portions 25. As shown in FIG. 2, the notches 26 include a notch 26a which is provided in a portion of the second magnetic pole portion 25 adjacent to the permanent magnet 23 in one circumferential direction (direction of arrow R1), and a notch 26b which is provided at a portion of the second magnetic pole portion 25 adjacent to the permanent magnet 23 in the other circumferential direction (direction of arrow R2). Thus, the second magnetic pole portion 25 has a symmetrical shape with respect to the q-axis of the motor 100.

In the rotor core 21, a thickness L4 (see FIG. 2) of a portion 21e located between the notch 26a and the side surface 23b of the permanent magnet 23 adjacent to the notch 26a is smaller than a width L5 (length in the direction perpendicular to the radial direction) (see FIG. 2) of the second magnetic pole portion 25 between the notches 26a and 26b. Similarly, in the rotor core 21, a thickness L6 (see FIG. 2) of a portion 21f located between the notch 26b and the side surface 23b of the permanent magnet 23 adjacent to the notch 26b is smaller than the width L5 (length in the direction perpendicular to the radial direction) (see FIG. 2) of the second magnetic pole portion 25 between the notches 26a and 26b. In addition, the thickness L4 (L6) of the portion 21e (21f) of the rotor core 21 is substantially equal to a length L7 of the claw portions 21d of the rotor core 21 in the radial direction.

Each of the notches 26 is formed in a substantially V shape such that a width W1 of the notch 26 is gradually reduced toward the inner peripheral side of the rotor core 21 when viewed from the axial direction. The bottom end 26c of the notch 26 on the inner peripheral side of the rotor core 21 is located radially outward of the bottom end 23d of the side surface 23b of the permanent magnet 23 on the inner peripheral side of the rotor core 21. In addition, the bottom end 26c of the notch 26 is located radially inward of a midpoint (point A) of the side surface 23b of the permanent magnet 23 in a thickness direction thereof.

A surface 26d (26e) of the notch 26, i.e., the notch 26a (26b), opposite to the permanent magnets 23 is disposed in a direction along the q-axis of the motor 100. That is, the inner surface 26d of the notch 26a and the inner surface 26e of the notch 26b are disposed to be substantially parallel to the q-axis. Further, the q-axis means an axis in a direction electrically perpendicular to the d-axis which is in a direction of a main magnetic flux. Further, an inner surface 26f (inner surface 26g) of the notch 26 on the side of the permanent magnet 23 is arranged in a direction (direction intersecting the q-axis) substantially parallel to the side surface 23b of the permanent magnet 23.

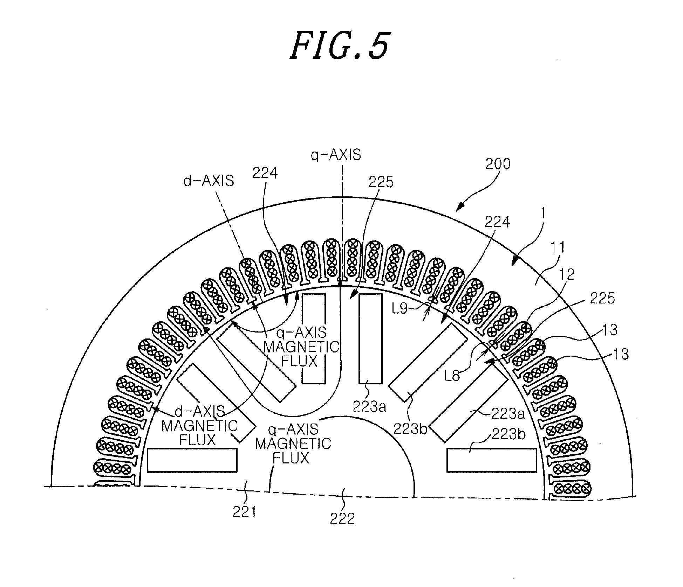

Next, with reference to FIGS. 5 to 7, a relationship between inductance and current supplied to the windings 12 of the motor 100 in accordance with the first embodiment will be described in comparison with a comparative example shown in FIG. 5.

As shown in FIG. 5, two permanent magnets 223a and 223b which are arranged in a V shape are provided in a motor 200 according to the comparative example. In the motor 200 according to the comparative example, unlike the motor 100 of the first embodiment, a rotor core 221 is configured such that an average value of a gap length L8 between a stator core 211 and a second magnetic pole portion 225 is equal to an average value of a gap length L9 between the stator core 211 and a first magnetic pole portion 224.

In the motor 200 according to the comparative example, magnetic flux due to the d-axis current is generated to pass through the permanent magnets 223a and 223b in the rotor core 221. Further, magnetic flux caused by the q-axis current is generated to respectively pass along the inside and outside of the V-shaped arrangement of the permanent magnets 223a and 223b in the rotor core 221.

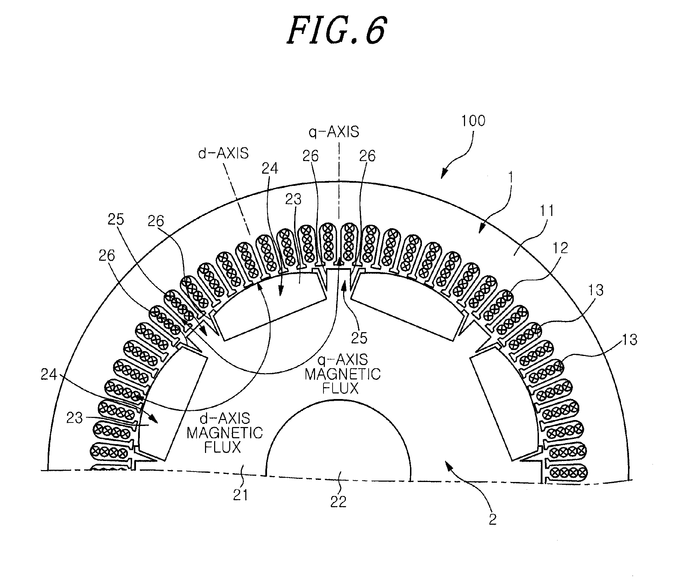

Contrastingly, in the motor 100 of the first embodiment, as shown in FIG. 6, the magnetic flux due to the d-axis current is generated to pass through the two adjacent permanent magnets 23 in the rotor core 21. In addition, the magnetic flux due to the q-axis current is generated to pass around the permanent magnet 23 in the inner peripheral side of the rotor core 21. In the motor 100, since the permanent magnets 23 are embedded in the vicinity of the outer periphery of the rotor core 21, the magnetic flux due to the q-axis current is suppressed from occurring in a portion of the rotor core 21 located radially outward of the permanent magnets 23. Referring to FIGS. 2 and 6, the thickness of the permanent magnets 23 in the direction of the d-axis magnetic flux passing through the permanent magnets 23 is larger than the minimum interval L1 between two adjacent permanent magnets 23.

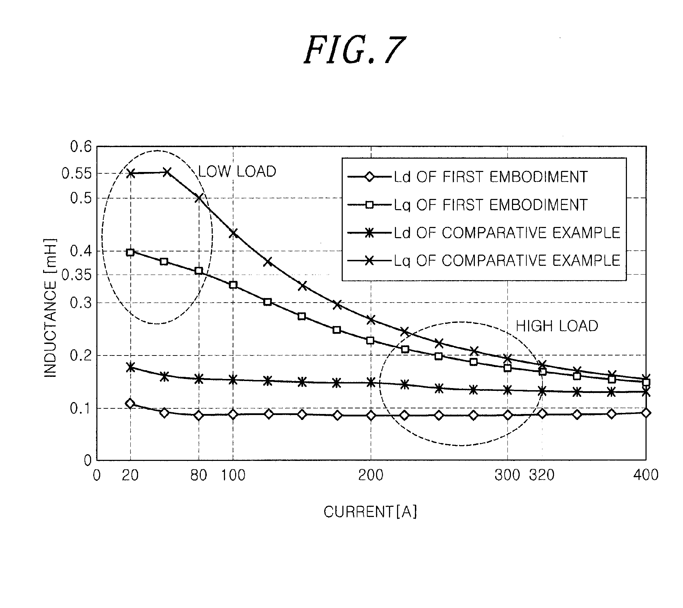

As shown in FIG. 7, in the motor 200 according to the comparative example, when current flowing through windings 212 is relatively small (about 20 A ∼ about 80 A) (low load), the q-axis inductance Lq is relatively large (about 0.5 mH ∼ about 0.55 mH). Therefore, in the motor 200 according to the comparative example, in the case of high-speed rotation, an output of the motor 200 is limited by voltage saturation (state where magnitude of a voltage required to obtain a desired torque from the motor 200 exceeds a voltage limit value).

In the motor 200 according to the comparative example, when the current flowing through the windings 212 is relatively large (about 200 A ∼ about 320 A) (high load), the q-axis inductance Lq is sharply decreased compared to the case of the low load. It is considered that this is because in the motor 200 according to the comparative example, two permanent magnets 223a and 223b are arranged in a V shape, and when the current is increased, the magnetic flux in the rotor core 221 is saturated on the inside and outside of the V-shaped arrangement of the permanent magnets 223a and 223b. Further, in the motor 200 according to the comparative example, the d-axis inductance Ld decreases gradually as the current flowing through the windings 212 increases and then becomes substantially constant in the case of the low load.

In the motor 100 according to the first embodiment, when the current flowing through the windings 12 is relatively small (about 20 A ∼ about 80 A) (low load), the q-axis inductance Lq is about 0.35 mH ∼ about 0.4 mH, and is smaller than the q-axis inductance Lq (about 0.5 mH ∼ about 0.55 mH) of the motor 200 according to the comparative example. Further, in the first embodiment, while the q-axis inductance Lq is reduced at the high load compared with at the low load, the reduction degree of the q-axis inductance Lq is lower as compared to the conventional motor 200.

Further, in the motor 100 according to the first embodiment, the d-axis inductance Ld decreases gradually as the current flowing through the windings 12 increases, and is then substantially constant. The d-axis inductance Ld of the motor 100 according to the first embodiment is smaller than that of the d-axis inductance Ld of the motor 200 according to the comparative example. This is considered to be due to the following reasons. That is, since the notches 26 (26a, 26b) (air) are provided in the second magnetic pole portion 25, the magnetic flux due to the d-axis current is difficult to pass through the second magnetic pole portion 25. As a result, it is considered that the d-axis inductance Ld becomes smaller.

In addition, when the current flowing through the windings 12 (windings 212) is relatively large (about 200 A ∼ about 320 A) (high load), a difference between the d-axis inductance Ld and the q-axis inductance Lq of the motor 100 according to the first embodiment is larger than a difference between the d-axis inductance Ld and the q-axis inductance Lq of the motor 200 according to the comparative example. That is, in the motor 100 according to the first embodiment, it is possible to obtain a reluctance torque greater than that of the motor 200 according to the comparative example.

In the first embodiment, as described above, the notches 26 are provided in the portions of the second magnetic pole portion 25 adjacent to the permanent magnets 23. Accordingly, unlike the case where the second magnetic pole portion having no the notches 26 is disposed between the adjacent permanent magnets 23, it is possible to easily suppress the magnetic flux of the permanent magnets 23 from leaking to the second magnetic pole portions 25. Also, since the notches 26 (air) provided in the second magnetic pole portion 25 make it difficult for the magnetic flux caused by the d-axis current to pass through the second magnetic pole portion 25, the d-axis inductance Ld can be reduced.

Further, in the first embodiment, as described above, the notches 26 are configured to include the first notch 26a which is provided at a portion adjacent to the permanent magnet 23 at one side of the second magnetic pole portion 25 in the circumferential direction, and the second notch 26b which is provided at a portion adjacent to the permanent magnet 23 at the other side of the second magnetic pole portion 25 in the circumferential direction. Thus, unlike the case where only one of the first notch 26a and the second notch 26b is provided in each of the second magnetic pole portions 25, it is possible to effectively suppress the magnetic flux of the permanent magnets 23 from leaking to the second magnetic pole portions 25 with two notches (first and second notches 26a and 26b).

In the first embodiment, as described above, the thickness L4 of the portion 21e located between the first notch 26a and the side surface 23b of the permanent magnet 23 adjacent to the first notch 26a and the thickness L6 of the portion 21f located between the second notch 26b and the side surface 23b of the permanent magnet 23 adjacent to the second notch 26b is smaller than the width (length in the direction perpendicular to the radial direction) L5 of the second magnetic pole portion 25 between the first and second notches 26a and 26b, in the rotor core 21. Thus, the magnetic flux is easily saturated in the portion 21e (21f) due to the small thickness L4 (L6) of the portion 21e (21f) located between the first notch portion 26a (second notch 26b) and the side surface 23b of the permanent magnet 23 adjacent thereto in the rotor core 21. Therefore, it is possible to further suppress the magnetic flux of the permanent magnets 23 from leaking to the second magnetic pole portions 25.

Further, in the first embodiment, as described above, each of the notches 26 is formed in a substantially V shape such that the width W1 of the notch 26 is reduced toward the inner peripheral side of the rotor core 21 when viewed from the cross section perpendicular to the rotational axis of the rotor core. Thus, it is possible to readily arrange the surface 26f (26g) of the notch 26 adjacent to the permanent magnet 23 in a direction along the side surfaces 23b of the permanent magnet 23 while arranging the surface 26d (26e) of the notch 26 opposite to the permanent magnet 23 in a direction along the q-axis of the motor 100.

Further, in the first embodiment, as described above, the bottom end 26c of the notch 26 on the inner peripheral side of the rotor core 21 is located radially outward of the bottom end 23d of the side surface 23b of the permanent magnet 23 on the inner peripheral side of the rotor core 21. Thus, unlike the case where the bottom end 26c of the notch 26 is located radially inward of the bottom end 23d of the side surface 23b of the permanent magnet 23 (when the depth of the notch 26 is large), it is possible to increase mechanical strength of the rotor core 21.

Additionally, in the first embodiment, as described above, the surface 26d (26e) of the notch 26 opposite to the permanent magnet 23 is arranged in a direction along the q-axis of the motor 100. Accordingly, unlike the case where the surface 26d (26e) of the notch 26 opposite to the permanent magnet 23 is disposed so as to intersect with the q-axis such that the second magnetic pole portion 25 is formed to taper toward the stator core 11, it is possible to increase the width (length in the direction perpendicular to the radial direction) L5 of the second magnetic pole portion 25. As a result, it is possible to increase the reluctance torque.

Also, in the first embodiment, as described above, the surface 26f (26g) of the notch 26 adjacent to the permanent magnet 23 is disposed in a direction along the side surfaces 23b of the permanent magnet 23. Thus, it is possible to easily reduce the thickness L4 (L6) of the portion 21e (21f) of the rotor core 21 located between the notch 26 and the permanent magnet 23. As a result, it is possible to further suppress the magnetic flux of the permanent magnet 23 from leaking.

### (Second Embodiment)

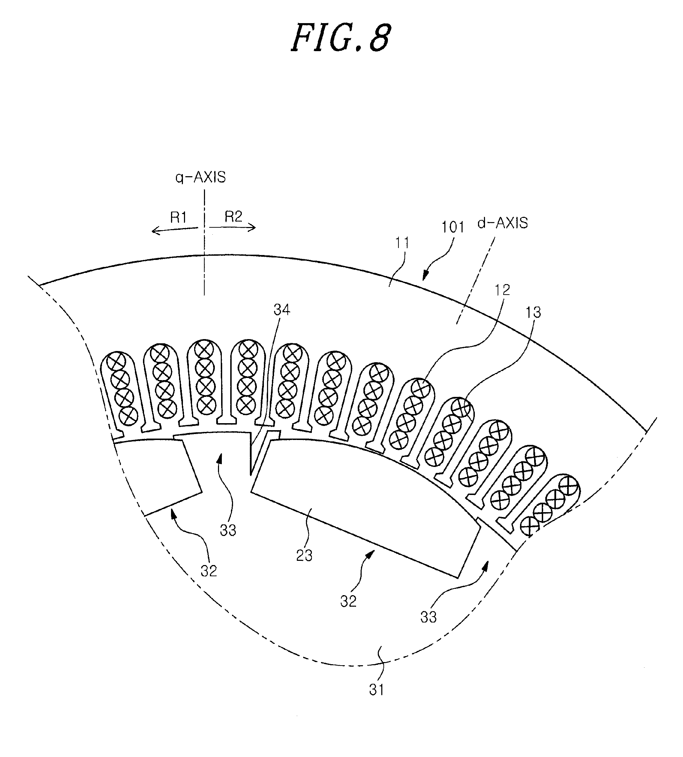

Next, a motor 101 of a second embodiment will be described with reference to FIG. 8. In the motor 101 of the second embodiment, unlike the first embodiment in which two notches 26 (first and second notches 26a and 26b) (see FIG. 2) are provided in the second magnetic pole portion 26, only one notch 34 is provided in the second magnetic pole portion 33. The motor 101 is an example of the "rotary electric machine" in accordance with the disclosed embodiments.

As shown in FIG. 8, in a rotor core 31 of the motor 101 in accordance with the second embodiment, a plurality of first magnetic pole portions 32 having the permanent magnets 23 and a plurality of second magnetic pole portions 33 having no permanent magnets 33 are alternately arranged in a circumferential manner. In the second embodiment, one notch 34 is provided at one side portion of the second magnetic pole portion 33 on the side of the permanent magnet 23 (e.g., direction of arrow R2). That is, the second magnetic pole portion 33 is formed in an asymmetrical shape with respect to the q-axis of the motor 101. The remaining configuration of the second embodiment is the same as the first embodiment.

In the second embodiment, as described above, the second magnetic pole portion 33 is formed in an asymmetrical shape with respect to the q-axis of the motor 101. Accordingly, unlike the case where the second magnetic pole portion is formed in a symmetrical shape with respect to the q-axis, it is possible to vary the motor characteristics depending on the direction of rotation by changing the saturation of the magnetic flux of the q-axis differently from the case of the symmetrical shape. In addition, other effects of the second embodiment are the same as those of the first embodiment.

Further, it should be considered that the embodiments disclosed herein are illustrative in all respects and not restrictive. The scope of the present invention is indicated by the appended claims rather than the foregoing description of the embodiments, and includes the meaning equivalent to the scope of the claims and all modifications within the scope.

For example, in the first and second embodiments, the motor has been described as an example of the rotary electric machine, but the rotary electric machine in accordance with the disclosed embodiments is not limited to the motor. For example, the disclosed embodiments may be applied to a generator. The rotary electric machine of the disclosed embodiments is also applicable to a vehicle, ship or the like.

Further, in the first and second embodiments, a case where the notch having a substantially V shape when viewed from the cross section perpendicular to the axis of rotation has been described, but the shape of the notch is not limited thereto. For example, the notch may be formed in a substantially quadrilateral shape with four sides other than the V shape when viewed from the cross section perpendicular to the axis of rotation.

Additionally, in the first and second embodiments, a case where the bottom end of the notch on the inner peripheral side of the rotor core is located radially outward of the bottom end of the side surface of the permanent magnet on the inner peripheral side of the rotor core has been described, but the present invention is not limited thereto. For example, the bottom end of the notch on the inner peripheral side of the rotor core may be located radially at a same position as that of the bottom end of the side surface of the permanent magnet on the inner peripheral side of the rotor core.

Furthermore, in the first and second embodiments, a case where the surface of the notch opposite to the permanent magnet is disposed in the direction along the q-axis of the motor has been described, but the present invention is not limited thereto. For example, the surface of the notch opposite to the permanent magnet may be disposed in a direction intersecting the q-axis of the motor.

Also, in the first and second embodiments, a case where the surface of the notch adjacent to the permanent magnet is disposed in the direction along the side surface of the permanent magnet has been described, but the present invention is not limited thereto. For example, the surface of the notch adjacent to the permanent magnet may be disposed in a direction intersecting the side surface of the permanent magnet.

Further, in the first and second embodiments, a case where the permanent magnets are formed of ferrite permanent magnets has been described, but the present invention is not limited thereto. For example, the permanent magnets may be made of a material containing rare earths such as neodymium.

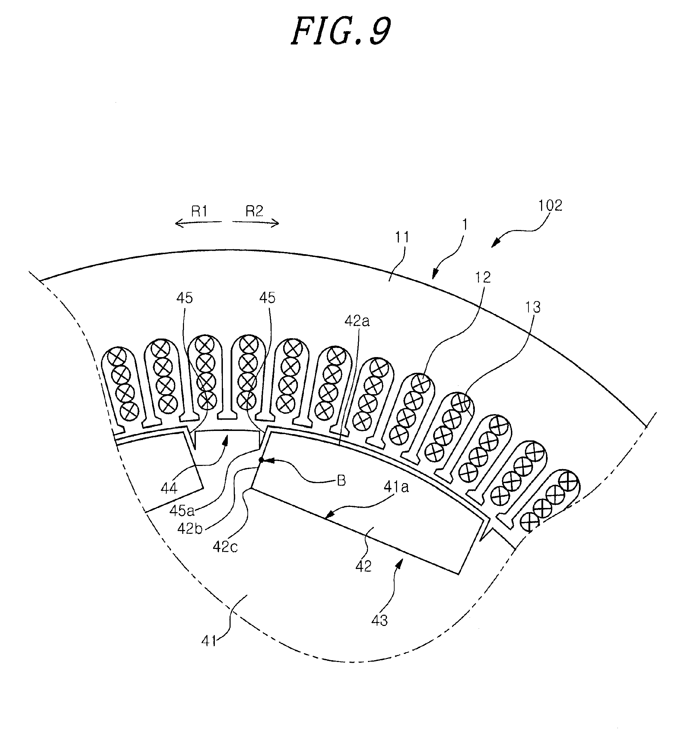

Furthermore, in the first and second embodiments, a case (see FIG. 2) where the bottom end 26c of the notch 26 is located radially inward of the midpoint (point A) of the side surface 23b of the permanent magnet 23 in the thickness direction has been described, but the rotary electric machine in accordance with the disclosed embodiments is not limited thereto. For example, as in a motor 102 according to a modification example illustrated in FIG. 9, a bottom end 45a of a notch 45 on an inner peripheral side of a rotor core 41 may be located radially outward of a midpoint (point B) of a side surface 42b of the permanent magnet 42 in the thickness direction. Further, the motor 102 is an example of a "rotary electric machine" in accordance with the disclosed embodiments.

Next, the motor 102 according to the modification example will be described with reference to FIG. 9. In the motor 102 according to the modification example, the permanent magnets 42 are embedded in mounting portions 41a formed in a hole shape such that the surface 42a of each of the permanent magnets 42 (first magnetic pole portions 43) on the side of the stator core 11 is not exposed. In addition, two notches 45 are provided in each of second magnetic pole portions 44. Further, the bottom end 45a of the notch 45 on the inner peripheral side of the rotor core 41 is located radially outward of a bottom end 42c of the side surface 42b of the permanent magnet 42 on the inner peripheral side of the rotor core 41 (and the midpoint (point B) of the side surface 42b of the permanent magnet 42 in the thickness direction thereof).

In the first and second embodiments, a case where one or two notches are provided in the second magnetic pole portion has been described, but the present invention is not limited thereto. For example, three or more notches may be provided in the second magnetic pole portion.

Further, in the first and second embodiments, a case where the permanent magnets are formed to have the arcuate surface facing the stator core when viewed in the cross section perpendicular to the rotational axis of the rotor core has been described, but the present invention is not limited thereto. For example, the permanent magnets may also be formed to have a substantially rectangular cross-sectional shape.

Furthermore, in the forgoing embodiments, the second magnetic pole portion has one notch such that it is formed in an asymmetrical shape with respect to the q-axis of the rotary electric machine or has two notches such that it is formed in a symmetrical shape with respect to the q-axis of the rotary electric machine. However, the second magnetic pole portion may be formed in a symmetrical or asymmetrical shape with respect to the q-axis of the rotary electric machine by changing shapes of the notches as well as by changing the number of the notches.

## Claims

1. A rotary electric machine comprising:
a rotor core in which first magnetic pole portions having permanent magnets and second magnetic pole portions having no permanent magnets are alternately arranged in a circumferential direction,
wherein each of the second magnetic pole portions has at least one notch provided near the permanent magnet adjacent thereto.

2. The rotary electric machine of claim 1, wherein the at least one notch includes a first notch and a second notch which are provided in circumferentially opposite sides of each of the second magnetic pole portions.

3. The rotary electric machine of claim 2, wherein a thickness of a portion of the rotor core between the first notch and the side surface of the permanent magnet adjacent thereto, and a thickness of a portion of the rotor core between the second notch and the side surface of the permanent magnet adjacent thereto are smaller than a width of the second magnetic pole portion between the first notch and the second notch in the circumferential direction.

4. The rotary electric machine of any one of claims 1 to 3, wherein the notch has a circumferential width which is gradually reduced toward an inner peripheral side of the rotor core when viewed in a cross section perpendicular to a rotational axis of the rotor core.

5. The rotary electric machine of any one of claims 1 to 4, wherein a bottom end of the notch on an inner peripheral side of the rotor core is located at a radial position same as that of the bottom end of the side surface of the permanent magnet on the inner peripheral side of the rotor core, or located radially outward of the bottom end of the side surface of the permanent magnet.

6. The rotary electric machine of any one of claims 1 to 5, wherein a surface of the notch opposite to the permanent magnet is arranged in a direction along a q-axis of the rotary electric machine.

7. The rotary electric machine of any one of claims 1 to 6, wherein a surface of the notch adjacent to the permanent magnet is arranged in a direction along a side surface of the permanent magnet adjacent thereto.

8. The rotary electric machine of any one of claims 1 to 7, wherein the second magnetic pole portions are formed in a symmetrical shape with respect to a q-axis of the rotary electric machine when viewed in a cross section perpendicular to a rotational axis of the rotor core.

9. The rotary electric machine of any one of claims 1 to 7, wherein the second magnetic pole portions are formed in an asymmetrical shape with respect to a q-axis of the rotary electric machine when viewed in a cross section perpendicular to a rotational axis of the rotor core.
